# EUROPEAN PATENT APPLICATION

(11) **EP 3 225 684 A1**
(43) Date of publication of application: **04.10.2017**
(21) Application number: 16163059.5
(22) Date of filing: 30.03.2016
(51) Int. Cl.: C12G 3/00, C12C 13/10, C12C 11/11, B67D 1/00

(54) **A METHOD OF PREPARING A BEVERAGE FROM A SINGLE-SERVE CONTAINER OR A KIT IN PARTS OF SINGLE-SERVE CONTAINER, SAID SINGLE-SERVE CONTAINER AND SAID KIT IN PARTS**

(71) Applicant: Anheuser-Busch InBev S.A., 1000 Brussels (BE)
(72) Inventor: The designation of the inventor has not yet been filed
(74) Representative: BiiP cvba

(57) **Abstract**

A method for obtaining a beverage, comprising the steps of:
a. providing a first single-serve container comprising a malt based beverage concentrate characterized in that said concentrate is in a liquid state, has a viscosity of maximally 40.10³ mPa.s a real extract density of at least 2,6°P and an alcohol content of at least 1 vol%;
b. Providing a second single-serve container containing an ethanol solution having an ethanol concentration of 80 vol% or more;
c. Providing a liquid diluent source;
d. Mixing a portion of the diluent source with the content of the second single-serve container, to obtain an intermediate liquid mixture having an alcohol content of 30 vol% or less;
e. Mixing the content of the first single-serve container with said intermediate liquid mixture and potentially an additional amount of the liquid diluent to obtain a beverage.

## Description

### FIELD OF THE INVENTION

The present invention concerns a method for dispensing a beverage starting from one or more single-serve containers containing a beverage concentrate in an amount sufficient for dispensing a single consumption volume.

### BACKGROUND TO THE INVENTION

When dispensing beer with an appliance starting from in-situ mixing of a beer concentrate and alcohol to be mixed with a diluent such as water, time to cool and mix the different ingredients for obtaining a sensory desired beer is a key parameter for the consumer.

WO2015155237 discloses a single-serve dual pod system with a first pod compartment comprising a concentrated beer granulate and a second pod compartment comprising concentrated ethanol.

WO 20141 59458 discloses a disposable beverage pod operable to be used with an apparatus for making a single serving flavoured beverage is provided. The disposable beverage pod is a container comprising a first compartment operable to contain an alcohol-free beverage concentrate in dry or semi-dry form and a second compartment operable to contain ethanol in liquid form. Preferably, the first compartment and the second compartment are attached, but operable to maintain the alcohol-free beverage concentrate separately from the alcohol concentrate prior to use.

While the above prior art documents claim allowing reconstituting a beer by mixing the content of the pods with water and subsequent carbonation, the mixing and cooling of the beverage to an acceptable temperature is either inconveniently long or requires a large amount of energy, leading to complex devices which are noisy, use significant amounts of energy and require a lot of maintenance.

It is therefore clear that there remains a market need for a method of reconstituting a malt based beverage immediately before or at dispensing allowing efficient mixing and cooling of the beverage, easy handling, minimal equipment maintenance and consumer acceptable functionality in terms of noise levels and time for reconstitution and dispensing whilst guaranteeing optimal sensory quality of the beverage.

### SUMMARY OF THE INVENTION

The present invention concerns a single-serve container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%.

The present invention also concerns a kit of parts comprising:
a. the first single-serve container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%.; and
b. a second single serve container containing an ethanol solution having an ethanol concentration of 80 vol% or more.

The present invention further concerns a method for obtaining a beverage from a single-serve container, said method comprising the steps of:
a. Providing a single serve container container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%.;
b. Diluting the content of said single-sever container with a diluent liquid having an alcohol content of 30 vol% or less.

The present invention also concerns a method for obtaining a beverage from a kit in parts, comprising the steps of:
a. providing a first single-serve container comprising a malt based beverage concentrate characterized in that said concentrate is in a liquid state, has a viscosity of maximally 40.10³ mPa.s a real extract density of at least 2,6°P and an alcohol content of at least 1 vol%;
b. Providing a second single-serve container containing an ethanol solution having an ethanol concentration of 80 vol% or more;
c. Providing a liquid diluent source;
d. Mixing a portion of the diluent source with the content of the second single-serve container, to obtain an intermediate liquid mixture having an alcohol content of 30 vol% or less;
e. Mixing the content of the first single-serve container with said intermediate liquid mixture and potentially an additional amount of the liquid diluent to obtain a beverage.

The prepared beverage preferably concerns a beer-like or cider-like beverage.

### BRIEF DESCRIPTION OF THE DRAWINGS

Fig. 1 schematically represents a dispensing appliance fluid line with a single-serve container connected thereto;
Fig. 2 schematically represents a dispensing appliance fluid line wiht a two single-serve containers connected thereto;
Fig. 3 shows a block diagram of a method of preparing a beverage concentrate;
Fig. 4 shows a graph illustrating the relationship between the concentration factors of different retentates (2) obtained from different beers (beer 1-4), and the amount of unfilterable compounds ("% solids") achieved is said retentates following the first concentration step a);
Fig. 5 schematically illustrates an embodiment of the nanofiltration step a) illustrated in Fig. 3;
Fig. 6 shows the saturation concentration of CO₂ in water and ethanol (EtOH) depending on pressure at a temperature of 298°K;
Fig. 7 shows the relationship between the saturation concentration of CO2 in water and ethanol at a pressure of 1 bar and a temperature of 298°K;
Fig. 8 shows various embodiments of dispensing apparatuses according to the present invention, comprising a unit dose comprising first and second chambers;
Fig. 9 shows an example of (a) loading a unit dose into a dispensing apparatus and (b) creating *in situ* and dispensing a fermented target beverage.
Fig. 10 shows an alternative embodiment of Fig. 1.

### DETAILED DESCRIPTION

### Definitions

As used herein, the term "concentrate" is given the definition of Oxford dictionary: "A substance made by removing or reducing the diluting agent; a concentrated form of something" (cf. http://www.oxforddictionaries.com/definition/english/concentrate). In line with this, the term "beer or cider concentrate" or, alternatively "(concentrated) beer or cider base" or "beer or cider syrup", is meant to relate to beer or cider, respectively which had the majority of its solvent component - i.e. water - removed, while retaining most of the dissolved components conferring such features as taste, smell, colour, mouthfeel etc.

A malt based beverage is defined as a beverage prepared with a barley malt or wheat malt, whether or not fermented. Examples of malt based beverages are, amongst others, beers such as lagers, stouts, ales and flavoured malt beverages such as eg. lime-a-rita.

A fermented beverage is defined as a beverage that during production was subjected to a microbiological fermentation step and includes, wine, cider and beer.

As used herein, the term "beer" is to be construed according to a rather broad definition:
*"the drink obtained by fermenting from a wort, prepared with starchy or sugary raw materials, including hop powder or hop extracts and drinkable water. Aside from barley malt and wheat malt, only the following may be considered for brewing, mixed with e.g. wheat malt, starchy or sugary raw materials in which the total quantity may not exceed 80%, preferably 40% of the total weight of the starchy or sugary raw materials:*
   *(a) maize, rice, sugar, wheat, barley and the various forms of them.*
   *(b) saccharose, converted sugar, dextrose and glucose syrup".*

Although according to certain national legislations, not all fermented malt-based beverages can be called beer, in the context of the present invention, the term "beer" and "fermented malt based beverage" are used herein as synonyms and can be interchanged. It follows, that as used herein the terms "reconstituted beer" and "reconstituted fermented malt based beverage" are to be understood as beverages composition-wise substantially identical to beer but obtained by addition of the solvent, i.e. water or carbonated water, to a previously prepared beer concentrate.

The amount of components dissolved in malt based beverages can also be expressed as so called specific gravity (relative density) or apparent specific gravity. The first one is measured as density (weight per unit volume) of beverage divided by the density of water used as a reference substance, whereas the second one as the weight of a volume of beverage to the weight of an equal volume of water. For example, a specific gravity of 1.050 ("50 points") indicates that the substance is 5% heavier than an equal volume of water. The densities of water, and consequently also beer, vary with temperature; therefore for both specific gravity and apparent specific gravity the measurement of the sample and the reference value is done under the same specified temperature and pressure conditions. Pressure is nearly always 1 atm equal to 101.325 kPa, while temperatures may differ depending on the choice of further systems for approximating beer density. Examples of such systems are two empirical scales, Plato and the Brix scale, that are commonly used in brewing and wine industries, respectively. Both scales represent the strength of the solution as percentage of sugar by mass; one degree Plato (abbreviated °P) or one degree Brix (symbol °Bx) is 1 gram of sucrose in 100 grams of water. There is a difference between these units mainly due to both scales being developed for solutions of sucrose at different temperatures, but it is so insignificant that they may be used virtually interchangeably. For example, beer measured at 12° Plato at 15.5°C has the same density as a water-sucrose solution containing 12% sucrose by mass at 15.5°C, which is approximately equal to 12° Brix, being the same density as a water-sucrose solution containing 12% sucrose by mass at 20°C. The Plato and Brix scales have an advantage over specific gravity in that they expresses the density measurement in terms of the amount of fermentable materials, which is particularly useful at early stages of brewing. As, of course, both beer and wort are composed of more solids than just sucrose, it is not exact. The relationship between degrees Plato and specific gravity is not linear, but a good approximation is that 1°P equals 4 "brewer's points" (4 x 0.001); thus 12° Plato corresponds to specific gravity of 1.048 [1 +(1 2 x 4 x .001)].

For sake of the present invention, a single-serve container is defined as a container comprising at least one ingredient in a predetermined amount such as to allow obtaining a single portion of a beverage when added to or diluted in a liquid stream such as water, whereby a single portion corresponds to a volume ranging between 20 cl and 50 cl, eg. 20 cl, 25 cl, 30 cl, 33 cl, 35 cl or 50 cl. The term "single-serve container" is synonym to and can be interchanged with "single-serve pod", "unit dose pod", "single-serve capsule" or "unit dose capsule".

Viscosity is defined as the dynamic viscosity measured at 20°C and is expressed in mPa.s.

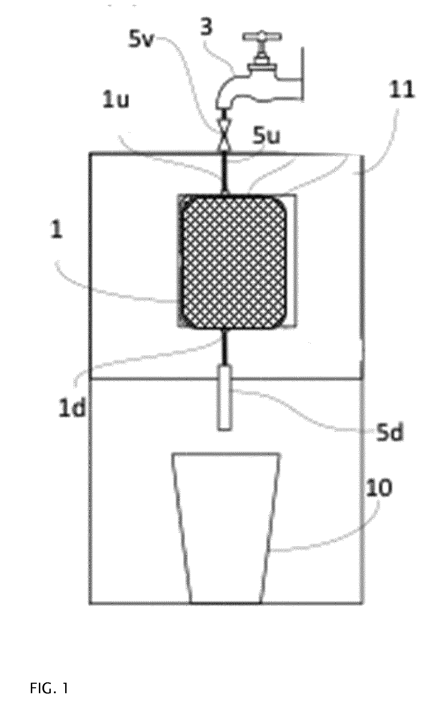

Fig. 1 schematically represents a beverage dispensing appliance (11) and in particular the fluid line thereof, the fluid line comprising a liquid inlet, connected to a liquid source such as a tap, a beverage keg provided externally of said appliance or liquid reservoir (3) incorporated in the appliance; a dispense outlet (5d); a mixing chamber (13) arranged in said fluid line between the liquid inlet and the dispensing outlet (5d); and a single-serve container (1) arranged in the dispensing appliance and having a container outlet (1 d) in fluid connection with the fluid line either upstream the mixing chamber (13) or at the mixing chamber (13).

According to the present invention, the single-serve container comprises a malt based beverage concentrate or fermented beverage concentrate in a liquid state, having a viscosity of maximally 40.10³ mPa.s; a real extract density of at least 2,6°P, preferably at least 6°P, most preferably at least 8°P and most preferably at least 12°P or even at least 20°P; and an alcohol content of at least 1 vol%.

The single-serve container is preferably manufactured in a material having good O₂ barrier properties and is preferably non-transparent to light and in particular UV light. An example of such a material is aluminium. Once filled, the single-serve container is properly sealed to protect the concentrate content during transport and to limit O₂ ingress into the container or contamination of the concentrate and preferably also preventing the concentrate from light struck.

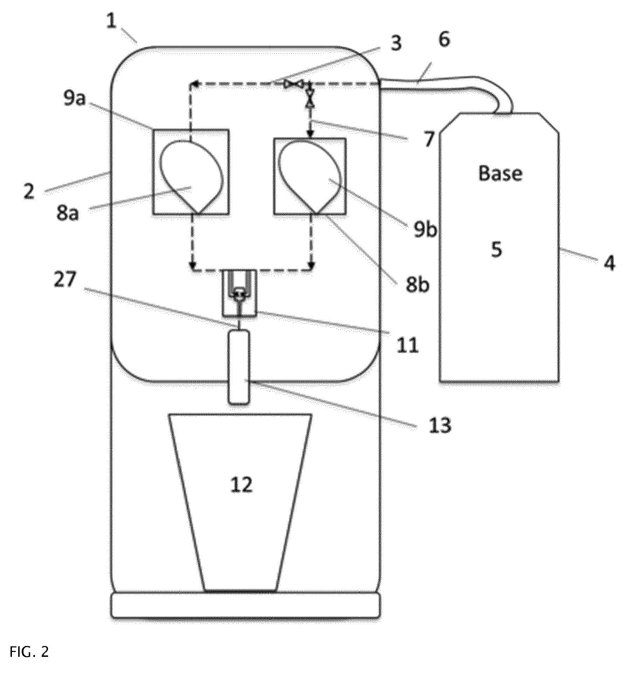

According to a another embodiment of the present invention and as illustrated in Fig. 2, the beverage dispensing appliance (11) and in particular the fluid line thereof, comprises a liquid inlet, connected to a liquid source such as a tap, a beverage keg provided externally of said appliance or liquid reservoir (3) incorporated in the appliance; a dispense outlet (5d); a mixing chamber (13) arranged in said fluid line between the liquid inlet and the dispensing outlet (5d); and a kit-of-parts of two single-serve containers (1-2) arranged in the dispensing appliance (11) and both having an outlet (1d-2d) in fluid communication with the fluid line either upstream the mixing chamber (1 3) or at the mixing chamber (13).

According to the present invention, the first single-serve container (1) comprises a malt based beverage concentrate (8) in a liquid state, having a viscosity of maximally 40.10³ mPa.s; a real extract density of at least 2,6°P, preferably at least 6°P, most preferably at least 8°P and most preferably at least 12°P; and an alcohol content of at least 1 vol%, preferably between 1 and 30 vol%, more preferably between 1 and 25 vol%, most preferably between 1 and 20 vol%.

The second single-serve container (2) contains an alcohol solution with an alcohol concentration of at least 80 vol%, preferably at least 85 vol% and more preferably at least 90 vol%.

The first and second single-serve containers can either be two separate containers; can be construed as a single container with two compartments or chambers sealed from one another; or as two individual containers attached to one another.

Again, the single-serve containers are preferably manufactured in a material having good O₂ barrier properties and is preferably non-transparent to light and in particular UV light. An example of such a material is aluminium. Once filled, the single-serve container is properly sealed to protect the concentrate content during transport and to limit O₂ ingress into the container or contamination of the concentrate and preferably also preventing the concentrate from light struck.

Both the single-serve container of Fig. 1 as the first single-serve container of Fig. 2 preferably contain a volume of concentrate of less than about 90 ml, preferably less than 85 ml (appr. 3oz), more preferably a volume of less than 60 ml (appr. 2oz) and most preferably of less than 45 ml.

The concentrate contained in the single-serve container of Fig. 1 and in the first single-serve container referred to in Fig. 2 is preferably prepared by subjecting a fermented beverage or malt based beverage such as beer or cider to a concentration step comprising nanofiltration or reverse osmosis to obtain a retentate and a fraction comprising alcohol and volatile flavour components, wherein the retentate is characterised by the concentration of unfilterable compounds equal to or higher than 20% (w/w), preferably 30% (w/w), most preferably 40% (w/w), as calculated from density measurement corrected for the alcohol amount, whereby a predetermined amount of the retentate is packed into the single-serve container. According to the present invention the concentrate is in a liquid state, having a viscosity of maximally 40.10³ mPa.s; a real extract density of at least 2,6°P, preferably at least 6°P, most preferably at least 8°P and most preferably at least 12°P or even at least 20°P; and an alcohol content of at least 1 vol%.

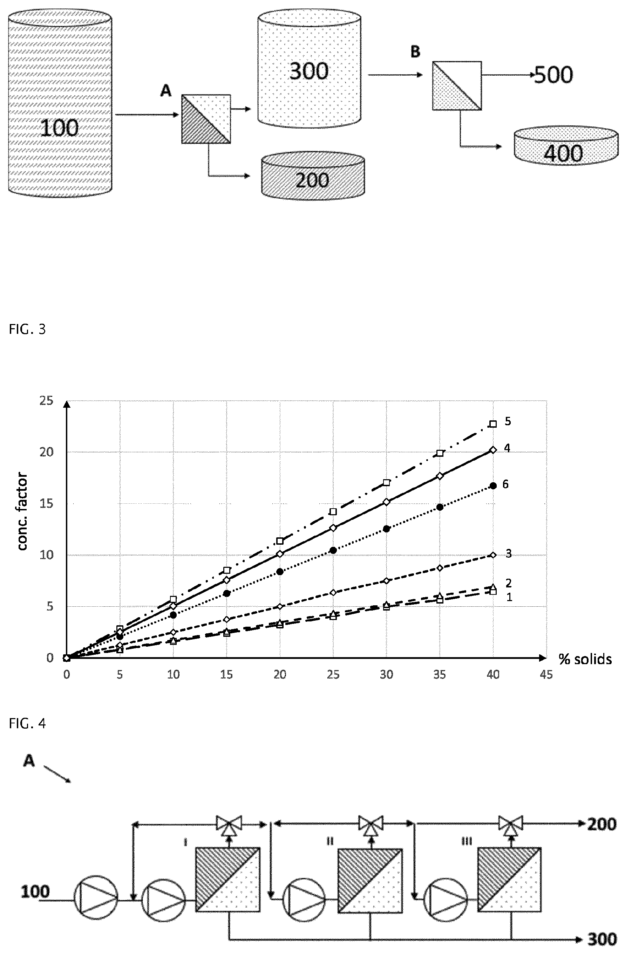

As illustrated in Fig. 3 a method for concentrating a malt based beverage or fermented beverage comprises a first step a), wherein the beverage (100) is subjected to nanofiltration (A) through a semi-permeable membrane acting as physical barrier to passage of most beer components of mean molecular weight (MW) > 150-200 Da, but permeable to water, majority of ethanol, monovalent salts and certain amount of beer flavour components. This first fraction retained on the membrane's inflow side is termed retentate (200) and is collected, and packed in single-serve containers.

In general, beer (100) subjected to nanofiltration (A) is preferably clear beer that was treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

As can be appreciated the above method of preparing the beverage concentrate for the single-serve container of the invention is particularly advantageous for obtaining low-volume high-density beer or cider concentrates. The degree of concentration of the final product largely depends on the degree of concentration of the retentate obtained via nanofiltration in step a). Therefore, the above method wherein the retentate not only comprises majority of beer (or cider) flavour components but also can potentially be characterised by a high concentration factor of 4, 5, 10, 15, or even 20 or higher.

A used herein the term *"concentration factor"* shall be understood as the ratio of the beer or cider volume subjected to nanofiltration or reverse osmosis in step a) to the volume of the obtained retentate at the end of the nanofiltration or reverse osmosis in step a), i.e. the ratio of the feed volume to the volume of the retentate obtained in the step a) of the method of the present invention. In an particularly preferred embodiment, a method in accordance with the previous embodiments is provided, wherein the retentate obtained in step a) is characterised by concentration factor of 4 or higher, 5 or higher, preferably 10 or higher, more preferably 15 or higher, most preferably 20 or higher. A relationship between the concentration factor within the above-defined meaning, and the concentration of unfilterable compounds possible to be obtained in the retentate from step a) naturally depends on the type of beer or cider initially subjected to nanofiltration or reverse osmosis, which is shown and can be appreciated from in the graph presented in Figure 4, wherein each line represents a different beverage (lines 1-4 were obtained for different beers, line 5 obtained for cider)

Concentration factors of 10 and above can advantageously, in terms of speed and performance, be obtained by, as used herein, a high-pressure nanofiltration, i.e. nanofiltration conducted under a pressure of minimum 18 bar. Thus, in preferred embodiments of the invention, a method is provided wherein the nanofiltration in step a) is a high-pressure nanofiltration, defined as nanofiltration conducted under a pressure in the range of about 18-41 bar, preferably in the range of about 20-35 bar, most preferably about 30 bar.

In case of cross-flow filtration we can always achieve the concentration one pass. But to make the operation more economical multi stages operation is done.

It has been observed that such high concentration potential can particularly be achieved using polymeric spiral membranes in range of 150-200 Daltons or similar. Examples of such membranes include thin film composite ATF (alternating tangential filtration, Refine Technology) membranes such as the ones currently available from DOW and Parker domnick hunter.

After the nanofiltration step, the highly concentrated retentate is collected and packed into the single-serve container.

Optionally, additional ingredients can be added to the concentrate such as alcohol - to attain an alcohol content of between 1 vol% and 30 vol% in the single-serve container-; flavour compounds; volatile scents; carbon dioxide and/or nitrogen, preferably in a gaseous state and preferably at a saturation concentration at a temperature of 25°C and at an pressure of at least 2 bar (=1 bar overpressure).

Referring back to Fig. 3 that schematically illustrates a general scheme of a preferred method for concentrating. The a first step (A), beer (100) is subjected to nanofiltration (A) through a semi-permeable membrane acting as physical barrier to passage of most beer components of mean molecular weight (MW) > 150-200 Da, but permeable to water, majority of ethanol, monovalent salts and certain amount of beer flavour components. This first fraction retained on the membrane's inflow side is termed retentate (200) and is collected and packed in the first single-serve container, whereas the fraction comprising alcohol and volatile flavour components is termed permeate (300) and is directed to a second concentration step (B). The second concentration step may involve fractionation, such as distillation, or reverse osmosis and results in separation of the permeate (300) from the previous nanofiltration step (A) into two fractions: first, a concentrated fraction comprising alcohol and flavour components (400), which is collected and packed in the second single-serve container; and, secondly, a largely aqueous leftover fraction (500), that is discarded. Both single serve containers can after being properly sealed be stored or transported over distances and readily rehydrated to a reconstituted beer having a taste profile from highly resembling to identical to that of a fermented beer.

As mentioned supra, beer (100) subjected to nanofiltration (A) is preferably clear beer that was treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

After the nanofiltration step, the highly concentrated retentate is collected and packed while the aqueous permeate is fed to the second concentration step b) in order to selectively retrieve ethanol and volatile flavour components, said step either comprising freeze concentration, reverse osmosis or fractionation, preferably comprising distillation, and/or combination thereof.

Distillation is a classic example of a fractionation technique known to be particularly suited for separating alcohol and volatile component from water. The term *"distillation"* as used herein refers to the separation of the liquid mixture into the components thereof by utilising the difference in relative volatility and/or boiling point among the components by inducing their successive evaporation and condensation in the process of heating and cooling. Examples of the distillation may include simple distillation, fractional distillation, multistage distillation, azeotropic distillation, and steam distillation. In a preferred embodiment, a method of the invention is provided wherein the concentration in step b) comprises aromatic distillation, said distillation defined as distillation configured to ensure high retrieval of aroma-producing compounds.

Distillation forms part of a larger group of separation processes based on phase transition, collectively termed as *"fractionation".* Other examples of fractionation comprise column chromatography that is based on difference in affinity between stationary phase and the mobile phase, and fractional crystallization and fractional freezing both utilising the difference in crystallisation or melting points of different components of a mixture at a given temperature. In an advantageous arrangement of the present invention, method b) may comprise such fractionation, preferably distillation, arrangement, wherein different fractions are analysed for the presence of different components such as different volatile flavour component species and then selectively directed for pooling with the retentate from step a) or discarded, which would provide greater control over aroma profile of the final beer concentrate of the invention.

In an alternative concentration process, the step b) of the method of comprises reverse osmosis; and then further comprises at least one additional treatment of the fraction comprising ethanol, obtained following said reverse osmosis, said treatment comprising fractionation, preferably distillation, or reverse osmosis. In said embodiment the aqueous permeate being the fraction comprising alcohol and volatile flavour components is first subjected to a step comprising reverse osmosis to obtain a fraction comprising alcohol and volatile flavour components at a higher concentration than before the step comprising reverse osmosis and leftover fraction, after which said fraction comprising alcohol and volatile flavour components is further subjected to at least one further concentration step comprising fractionation, preferably distillation, or reverse osmosis, to obtain a concentrated fraction comprising alcohol and volatile flavour components and a leftover fraction.

In another alternative concentration process, a method is provided wherein the reverse osmosis is a high resolution reverse osmosis i.e. reverse osmosis conducted under operating pressure comprised within the range of 60-120 bar and at temperature of 0-12 °C.

According to yet another alternative concentration process, a method is provided wherein freeze concentration is applied as further concentration step (B). Freeze concentration essentially concerns the removal of pure water in the form of ice crystals at sub zero temperatures. Freeze concentration has the advantage over eg. distillation that it does not remove ash or extract (ions, organic components, etc.) from the permeate obtained by nanofiltration in step (A), which is the case in distillation. For this reason it is believed that a beer or cider reconstituted by the addition of water after concentration by:
a) Subjecting malt based beverage or fermented beverage such as beer or cider (100) to a first concentration step comprising nanofiltration (A) or reverse osmosis to obtain a retentate (200) and a fraction comprising alcohol and volatile flavour components (300), wherein the retentate (200) is characterised by the concentration of unfilterable compounds equal to or higher than 20% (w/w), preferably 30% (w/w), most preferably 40% (w/w), as calculated from density measurement corrected for the alcohol amount;
b) Subjecting the fraction comprising alcohol and volatile flavour components to a next concentration step comprising freeze concentration to obtain a concentrated fraction comprising alcohol and volatile flavour components and a leftover fraction;
c) Combining the concentrated fraction comprising alcohol and volatile flavour components from b) with a diluent to obtain an intermediate liquid mixture having an alcohol content of 30 vol% or less; and
d) Combining the intermediate liquid mixture with the retentate of step a) to obtain a beverage that has a taste profile that can not or only very subtly be distinguished from the original beer or cider.

Because the present invention aims to provide highly concentrated beverage base in order to minimise costs of its transportation, it is desirable that the concentrated fraction comprising alcohol and volatile flavour components from step b) is also maximally concentrated. Therefore, in a preferred embodiment of the present invention, the concentrated fraction comprising alcohol and volatile flavour components from step b) comprises between 80-99 % ABV, preferably at least 85 % ABV. As used herein the term "% ABV" or "percent alcohol by volume" refers to a worldwide standard measure of how much ethanol is contained in an alcoholic beverage, expressed as a percentage of total volume. In a possible embodiment in accordance with previous embodiments, a method is provided wherein concentration step b) is repeated until the concentrated fraction comprising alcohol and volatile flavour components comprises 80-99 % ABV.

In a preferred embodiment of the concentration method, beer subjected to the concentration method is beer of gravity higher than 11 °P, preferably is high gravity beer defined as beer of original gravity of 14-25 °P or even higher. Concentration of high gravity beer is preferred for being applied to the method of the present invention as such arrangement provides synergistic approach resulting in final concentrates characterized by very high concentration factors, not obtainable by any method so far known in the art. As it will, however, be immediately appreciated by any skilled person, any commercial grade beer can be subjected to the provided herein method to obtain a beer concentrate. In line with the above, in another preferred embodiment in accordance with the above embodiments, beer subjected to the method of the invention is any beer comprising alcohol concentration comprised between 2- 16 % ABV, preferably between 4-12 % ABV, most preferably between 6-10 % ABV.

For example, beer (100) of original gravity of 11°P (before fermentation), after fermentation can have alcohol concentration of about 5 % ABV (RDF 82%) and extract density equal to 2 °P of non-fermented sugars and other compounds. During nanofiltration (B) according to the method of the invention, for example 100 hL of such beer will be separated in 2 flows:
- 5 hL of concentrated retentate (2) having extract value of about 40 °P of non-fermented sugars and about 5 % ABV, and
- 95 hL of aqueous permeate (3) containing mainly water, alcohol at concentration of about 5 % ABV, and some fraction of volatile aroma compounds.

In the above example, the concentration factor (calculated by dividing the flow of retentate (2) by the flow of the beer or cider (1) fed into the nanofiltration system) of the final retentate (2) is about 20, which appears impressive as compared to concentration factors achieved by currently known methods. Defining the extent to which an alcoholic beverage was concentrated, however, by simply using concentration factors is can be confusing and is insufficient as the concentration factors depend on the initial concentration of the liquid fed to a membrane-based concentrating system. For example, very diluted liquids can be concentrated several to many folds more than their denser (more concentrated) counterparts, as they contain more water and thus can be volumetrically reduced to greater extent by removing this water through a filtration membrane. A much more exact way of defining the concentration extent in such case is by measuring or estimating the amount of unfilterable components of a liquid subjected to filtration that remained in the retentate after the membrane-based concentration process. For better understanding, Figure 4 shows the relationship between the amount of unfilterable components ("% solids"; x-coordinate) obtained for different retentates of different alcoholic beverages, and their corresponding concentration factors ("conc. factor", y-coordinate); the values obtained for six different alcoholic beverages correspond to curves 1-6. The alcoholic beverages included five beer varieties and one type of cider; they are characterized in the Table 1 given below.

**Table 1. Alcoholic beverages subjected to nanofiltration according to the method of the invention.**

| **beverage** | **beer 1** | **beer 2** | **beer 3** | **beer 4** | **beer 5** | **cider** |
|---|---|---|---|---|---|---|
| **curve no**. | 1 | 2 | 3 | 4 | 5 | 6 |
| **original gravity** | 16.30% | 17.50% | 16.00% | 11.00% | 22.00% | 15.95% |
| **RDF** | 62.00% | 67.00% | 75.00% | 82.00% | 92.00% | 85.00% |
| **ABV %** | 5.61% | 6.51% | 6.67% | 5.00% | 11.24% | 9.00% |

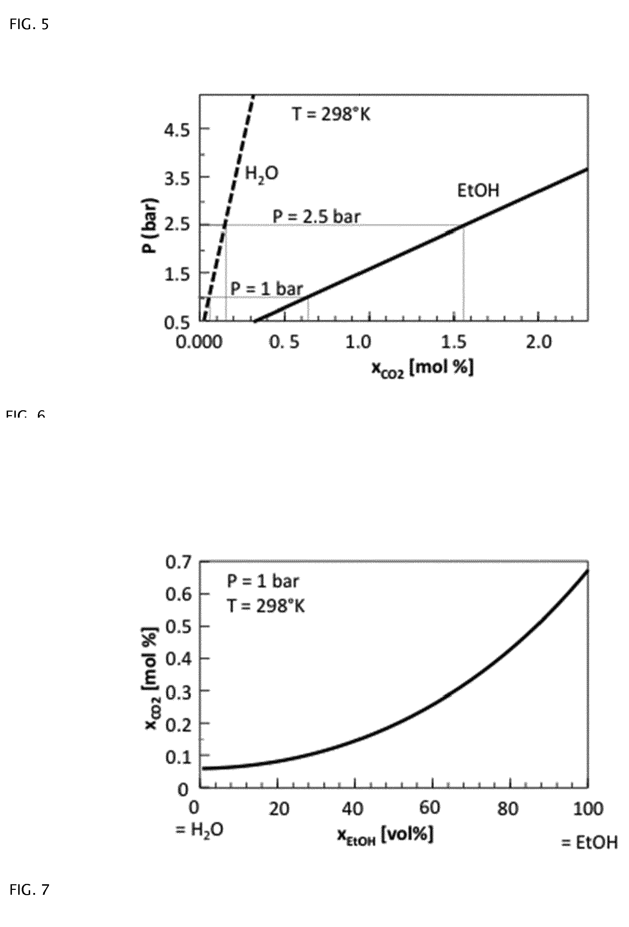

In preferred embodiments of the invention, the higher range of concentrations of the unfilterable components (30% and above) as exemplified above and in Figure 3, can e.g. be achieved in nanofiltration installations operating in cross-flow or tangential flow filtration mode, wherein the beer flow travels tangentially across the surface of the nanofiltration membrane. A schematic illustration of cross-flow filtration with recirculation is depicted in Figure 4 that also lists beer compound species that are retained by the nanofiltration membrane vs the species that pass through the membrane forming the permeate. Cross-flow modes are preferred over dead-end filtration modes as they promote shear to prevent membrane fouling. Recirculation (depicted by arrow pointing backwards) further serves to increase the filtration efficiency. The nanofiltration unit can advantageously be employed in a multi stage multi-stage nanofiltration operation, as schematically showed in Figure 5 depicting a nanofiltration installation comprising 3 connected nanofiltration units (I, II, III). In such nanofiltration arrangement, beer (100) is configured to pass from one unit (stage) to the next one while becoming more and more concentrated via nanofiltration. After the final stage, the final retentate (300) is obtained, which in present example would be about 5 hL with the concentration factor of 20. Of course, as can be appreciated by any skilled person the amount of units in a multi-stage nanofiltration installation can vary depending on the intended process design.

As mentioned above, in particularly preferred embodiments the first step nanofiltration (A) employs high pressure nanofiltration, i.e. nanofiltration operating under inlet pressure of 18 bar and above, typically comprised between from 20 to 30 bar. Such nanofiltration can be performed at ambient temperature (20°C) or below, possibly bat 10 °C or lower.

Following the nanofiltration step (A), the obtained permeate is subjected to the second concentration step (B), for example, via fractional distillation on a fractionating column. Such arrangement is advantageous as different flavour component fractions can be selectively collected or discarded from the column, which allows greater control over the preferred flavour/aroma profile of the final beer concentrate of the invention. Typically, distillation will be configured to provide a highly concentrated fraction comprising alcohol and aromas (400), i.e. a fraction comprising between 80-98 % ABV, which will be packed in the second single-serve container. Following present example, for ease of calculations it can be assumed that distillation process provided alcohol solution of e.g. 95 % ABV in a volume of 5 hL.

The overall beer concentrates prepared by this concentration process (fractions 200 and 400 together) (can achieve final concentration of unfilterable compounds (following addition of the concentrated ethanol fraction (4) to the nanofiltration retentate (2)) equal to or higher than 8%, 10%, 15%, 20%, 25%, even up to 30% (w/w), which is equivalent to the final concentration factor (calculated as a ratio of starting volume of beer (1) to the volume of the final concentrate (6)) ranging from 4 to 6 or even 6.5.

Optionally, additional ingredients can be added to the second single-serve container such as alcohol to attain an alcohol content of 80 vol% or more; or volatile flavour components; or gaseous carbon dioxide or nitrogen.

At introduction in the appliance the single-serve container is opened, either manually by a consumer or automatically within the appliance (eg by piercing at closing a door of the appliance). Once properly introduced in the appliance, the content of the single-serve container is preferably emptied into a mixing chamber, where the concentrate is diluted to a desired level with water, with beer, with an alcoholic solution or another diluent of choice, to obtain a single portion volume of beverage. The mixture can optionally be cooled and/or carbonated before dispensing. In case of diluting the concentrate with an alcoholic (ethanol) solution, it is preferred that the ethanol content is 30 vol% or less, more preferably 25 vol% or less, most preferably 20 vol% or less, allowing fast mixing of the concentrate in the alcohol solution without macromolecules precipitating in the mixture. As such mixing energy can be kept to a minimum and heating of the mixture due to mixing is limited or avoided.

The single-serve container of figure 1 and the first single-serve container of Fig. 2 preferably contain about 40 - 60ml of concentrate for dispensing a single-serve portion of between 200 ml and 350 ml. The second single-serve container preferably comprises 10 to 20 ml of alcohol solution for dispensing a single-serve portion of between 200 ml and 350 ml. As, preferably the appliance allows dispensing a beverage portion at a temperature of 3°C or lower, without precooling the single-serve container and by pre-cooling the diluent to 0°C or just slightly lower (depending on the alcohol content), limiting the energy needed for mixing both fluid streams is key. Additionally, minimizing the energy needed for mixing both fluid streams, allows for designing a mixing chamber without moving parts such as an impeller and hence designing an appliance that is easy in use and maintenance and yet performs according to a high standard of short time for reconstitution and dispensing whilst guaranteeing optimal sensory quality of the beverage.

The method for obtaining a beverage from a kit in parts, comprising the steps of:
a. providing the first single-serve container comprising a malt based beverage concentrate characterized in that said concentrate is in a liquid state, has a viscosity of maximally 40.10³ mPa.s; a real extract density of at least 2,6°P, preferably at least 6°P, most preferably at least 8°P and most preferably at least 12°P; and an alcohol content of at least 1 vol%;
b. Providing the second single-serve container containing an ethanol solution having an ethanol concentration of 80 vol% or more;
c. Providing a liquid diluent source such as water, beer or an ethanol solution;
d. Mixing a portion of the diluent source with the content of the second single-serve container, to obtain an intermediate liquid mixture having an alcohol content of 30 vol% or less, preferably 25 vol% or less, more preferably 20 vol% or less;
e. Mixing the content of the first single-serve container with said intermediate liquid mixture and potentially an additional amount of the liquid diluent to obtain a beverage.

The mixture can optionally be cooled and/or carbonated before dispensing. By first diluting the content of the second single-serve container to obtain an intermediate mixture having an alcohol content of 30 vol% or less, preferably 25 vol% or less, more preferably 20 vol% or less, the content of the first single-serve container can be mixed swiftly with the alcohol of the second single-serve container, without macromolecules precipitating in the mixture. As such mixing energy can be kept to a minimum and heating of the mixture due to mixing is limited or avoided.

According to a preferred embodiment, the first and second single-serve containers comprise an amount preferably gaseous carbon dioxide and/or nitrogen, such that for carbonation of the reconstituted beverage no or only a limited amount of external pressurized gas needs to be provided. Referring to figure 6, illustrating the CO₂ saturation concentration in a water-ethanol mixture at a temperature of 298°K as a function of ethanol concentration. The abscissa x_{EtOH} = 0% corresponds to pure water, and x_{EtOH} = 100% corresponds to pure ethanol. It can be seen that CO₂ saturation concentration in ethanol is about one order of magnitude higher than in water. This means that about ten times more carbon dioxide can be dissolved in pure ethanol as in a same volume of pure water. For this reasons, for target beverages having an ethanol contents of at least 5 vol.%;, it is possible to include in the second single-serve container part of the CO₂ required for the target beverage at a reasonable pressure in the second-single serve container of 1 to 4 bar above atmospheric pressure.

For example, the ethanol of the second single-serve container contains:
- CO₂ at a concentration, x_{CO2}(EtOH), comprised between 1.0 and 3.0 mol.%, preferably between 1.5 and 2.5 mol.%, with respect to the total content of the second single-serve container.

If the first single-serve container contains some water, such as 10 to 40 vol.% water, then it is also possible to dissolve gaseous CO₂ and/or N₂ in said water contained in the first single-serve container. This can contribute to achieving more bubbles in the target beverage. This can be particularly useful in case of a target beverage having a low ethanol content. Depending on the amounts of ethanol and of gas desired in the target beverage, gas concentrations and pressures in the second and, optionally the first single-serve containers can be determined.

The water of the first single-serve container contains:
- CO₂ at a concentration, xCO₂(H₂0), comprised between 1,0 and 3,0 mol.%, preferably between 1.5 and 2.5 mol.%, with respect to the total water content of the first single serve container.

Finally, the final gas content in the target beverage can be tuned with an external source of pressurized gas (9). This of course requires the use of an additional consumable, which is detrimental to the comfort of use of a dispensing apparatus, but since the source of pressurized gas is merely used for fine tuning the final content of gas in the target beverage, the gas consumption is very limited and one charge can last a long time.

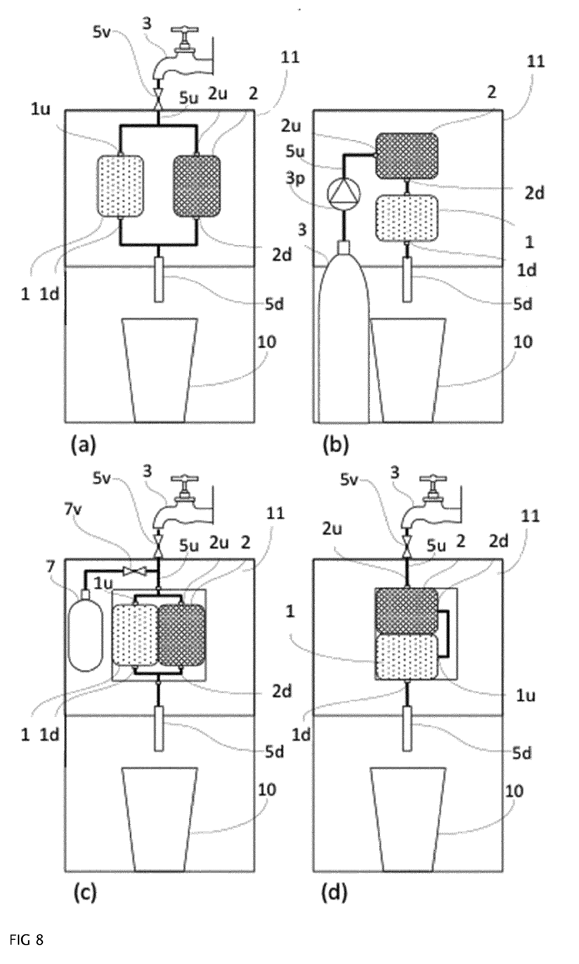

The liquid diluent (3) generally comprises water, and can be pure water only. By pure water, it is meant water containing minerals rendering it drinkable. In particular, the liquid diluent can be still water, as illustrated in Figure 8 by a tap, but it can of course also be provided contained in a reservoir or other container. A dispensing apparatus for dispensing a fermented beverage such as beer, and using unit doses requiring no additional source of gas and using pure water as liquid diluent is of course most comfortable for the end users.

Alternatively, the liquid diluent (10) can be a base liquid, for example having a neutral flavour profile which, when mixed with different types of concentrated beverages of the first single-serve container and with the ethanol of the second single-serve container yields a large variety of target beverages. Such embodiment is illustrated in Figure 2 wherein a bottle containing a liquid diluent (3) is used. For example, the liquid diluent can be a base beer without any flavouring highlights, and the first single-serve container is available in a variety of flavours, such as cherry beer, dark abbey beer, amber abbey beer, stout, etc. With a single supply of base beer, it is possible to yield a large variety of target beers by mixing said base beer with a unit dose comprising a second single-serve container filled with ethanol and a gas, and a first single-serve container comprising a corresponding variety of flavoured concentrated beverage extracts. Comparing it to a painting, the base beer forms a background tone of the painting, and the flavoured concentrated beverage extracts yields the coloured central subject of the picture.

The concentrated beverage extracts contained in the first single-serve container preferably comprise various amounts of ethyl acetate, isoamyl acetate, ethyl butyrate, and ethyl hetanoate. These are the major flavouring compounds of beer, which concentration profile gives each beer its own characteristic flavour profile. As explained above, it is preferred that the concentrated beverage extracts be produced by removing a fraction of the water and most (or all) of the ethanol of a conventionally brewed beer. Alternatively, or concomitantly, it can be produced or completed by addition of flavouring compounds.

As illustrated in Figure 8(a)&(b), the first and second single-serve containers can be provided as two separate units, which have to be loaded individually into a dispensing apparatus. This can be advantageous if the end user wishes to control the amount of ethanol in its target beverage. Each unit of the first and second single-serve containers (1, 2) has an inlet connection (1 u, 2u) and an outlet connection (1d, 2d), which can be coupled to an upstream and downstream ends (5u, 5d) of a dispensing tube. It is, however, more inconvenient having to load two dose units sequentially before being able to dispense a target beverage.

Alternatively, as illustrated in Figure 8(c)&(d), the first and second single-serve containers can be provided as two separate single-serve containers in a single unit. This gives no choice with respect to the proportion of ethanol in the target beverage, but is easier to use, as the end user only needs to load a single unit into the dispensing apparatus, as is usual in coffee machines. As shown in Figure 8(c)&(d), the two single-serve containers in a single unit dose can be fluidly coupled in series or in parallel by internal tubing initially closed by a membrane, until the pressure of the liquid diluent burst open said membrane. Alternatively, the introduction of a dose unit containing first and second single-serve containers, moves the said first and second single-serve containers and piercing said membrane upon bringing them into contact.

As its name indicates, a dose unit corresponds to one serving of beverage. Depending on the country and type of beverage, one serving can be a glass (10) of capacity generally comprised between 20 and 50 cm³ (1 cm³ = 0.1 cl). It follows that for a target beverage having an ethanol content of 5 vol.%, the second single-serve container (2) must therefore have a capacity of 10 cm³ for a 200 cm³ target beverage, of 17 cm³ for a 330 cm³ target beverage, and 25 cm³ for a target beverage of 500 cm³ (0.5 I). Similarly, a 500 cm³ target beverage having a 9 vol.% ethanol content requires a first single-serve container of 45 cm³ capacity. The larger the second single-serve container, the larger the amount of CO₂ or N₂ which can be stored, and the larger the alcohol content of the target beverage.

The volume of the first single-serve container (1) may vary more than the one of the second single-serve container, depending on the amount of water still present in the first single-serve container. For a first chamber containing not more than 5 vol.% water, the capacity of the first single-serve container can be comprised between 10 and 50 cm³. For a first chamber comprising between 20 and 40 vol.% water, the capacity of the first single-serve container can be of the order of 50 to 150 cm³.

As illustrated in Figure 8, the dispensing apparatus allows for producing *in situ a* fermented target beverage by addition of a liquid diluent, and for dispensing the thus produced fermented target beverage. The dispensing apparatus comprises:
(a) a housing (12) for receiving the first single-serve container (1),
(b) a housing (12) or receiving the second single-serve container (2),
(c) a dispensing tubing system (5d, 5u) comprising an upstream end (5u) and a downstream end (5d), the upstream end being coupled to a source of liquid diluent, and fluidly connecting said source of liquid diluent, to the housing for receiving the first single-serve container, to the housing for receiving the second single-serve container, and to the downstream end (5d) of the dispensing tube, which is open to an outer atmosphere.

A first single-serve container and a second single-serve container as discussed supra are loaded in a respective housing, such that the liquid diluent (3) flowing from the upstream end (5u) to the downstream end (5d) of the dispensing tubing system must flow through the interior of both first and second single-serve containers (1, 2).

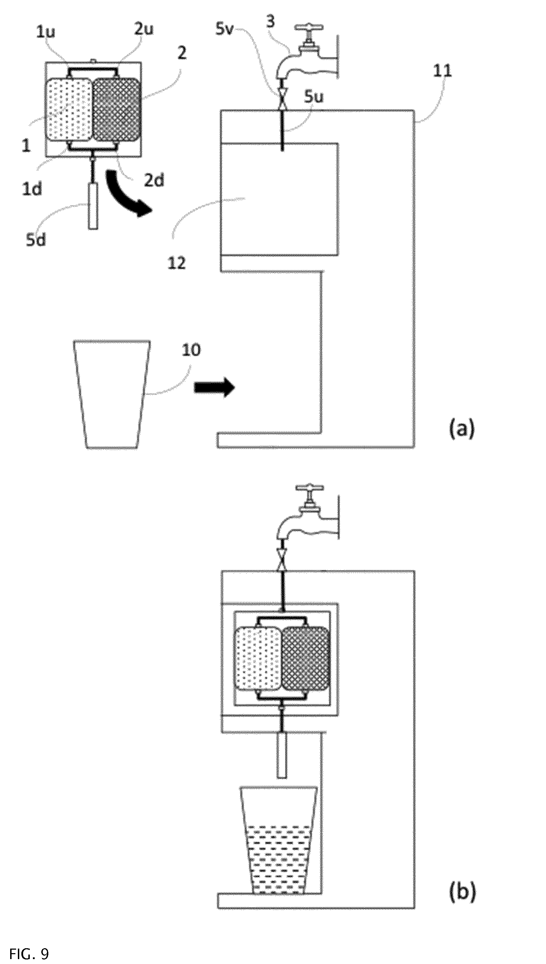

The dispensing apparatus can comprise two different housings (1 2) fluidly connected to one another for receiving the first and second single-serve containers separately. Alternatively, as shown in Figure 9, a single housing (12) can be used to receive either a single unit dose comprising both first and second single-serve containers, or two separate first and second unit doses, each containing the first and second single-serve containers, respectively. Figure 8(a)&(b) show examples wherein two separate unit doses are used, and Figures 8(c)&(d) and 9 show examples of apparatuses receiving a single unit dose containing both first and second single-serve containers.

For hygienic reasons and ease of use, a unit dose as illustrated in Figure 9(a) can comprise first and second single-serve containers as well as the downstream end (5d) of the dispensing tubing system. The unit dose can be loaded in the housing of the dispensing apparatus, a glass or other vessel of appropriate capacity is placed below the downstream end of the dispensing tubing system. This way, every time a new unit dose is loaded in the dispensing apparatus, a new and clean downstream end (5d) of the dispensing tube is used. The upstream end of dispensing tubing system (5u) must also be changed at regular intervals, but since the same liquid diluent is used for each serving, it needs not be changed after each helping. This is particularly true in case the diluent liquid is still water, which is a preferred embodiment.

Downstream of the first and second single-serve containers, the dispensing tubing system may comprise a mixing chamber for mixing the liquid diluent with the concentrated beverage extracts, ethanol, and gas. The mixing chamber can comprise moving element to dynamically mix the components or, alternatively, it may be a static mixer or simply a sharp curving portion in the downstream end of the dispensing tubing system. If a mixing chamber is used, care must be taken to select a mixing mechanism which does not generate excessive amounts of foam due to the presence of gaseous CO₂ and/or N₂. Yet in case of high carbonation levels (with either or both of CO₂ and N₂) in the single-serve containers, expansion of the gas in the mixing chamber will generate cooling.

The present invention also concerns a method for producing a fermented target beverage *in situ* and dispensing said fermented target beverage. An example of the method is illustrated in Figure 9, the method comprising the following steps:
(a) providing a dispensing apparatus as discussed supra, and connecting the upstream end (5u) of the tubing system to a source of liquid diluent (3),
(b) loading both first single-serve container (1) and second single-serve container (2) in their housing (12),
(c) flowing the liquid diluent from the upstream end to the downstream end of the tubing system, through both first and second single-serve containers, whereby the ethanol content of the second single serve container is reduced to at max. 30 vol% before mixing it with the content of the first single-serve container, and
(d) recovering the thus produced fermented target beverage in a vessel (10).

Using the apparatus of the present invention according to the foregoing method and using the unit doses discussed supra, allows the *in situ* preparation of a large variety of fermented beverages, in amounts corresponding to one glass of beverage, of capacity comprised between 200 and 500 cm³ (= 20 - 50 cl). The thus prepared fermented target beverage may comprise between 4 and 9 vol.% ethanol, and between 1 and 6 g / l of CO₂ and/or N₂ typical ratio CO₂/N₂ is about 3), by simply loading a unit dose into the dispensing apparatus and flowing the liquid diluent through the unit dose. In a most preferred embodiment, the liquid diluent is still water, and no additional source of pressurized gas is required. The latter is made possible by taking advantage of the substantially higher solubility of gases such as CO₂ or N₂ in ethanol compared to water, or to a 4 to 9 vol.% ethanol solution in water (cf. Figures 6&7).

Alternatively, the liquid diluent is not still water only, but a base beverage contained in a vessel (cf. Figure 1 (b)). This solution allows the creation of a large variety of beverages around the theme of the base beverage. A selection of base beverages with various flavour profiles can also be provided to further increase the creative possibilities of the end user. In yet another embodiment, an additional source of pressurized gas (7) can be used to fine tune the gas content in the thus produced fermented beverage.

The first single-serve container preferably contains about 40 - 60ml of concentrate for dispensing a single serve portion of 350 ml, whereas the second single-serve container preferably comprises between 5 and 55ml of concentrated ethanol (80 vol% ethanol or higher). As, preferably the appliance allows dispensing a beverage portion at a temperature of 3°C or lower, without precooling the single-serve container and by pre-cooling the diluent to 0°C or just slightly lower (depending on the alcohol content), limiting the energy needed for mixing both fluid streams is key. Additionally, minimizing the energy needed for mixing both fluid streams, allows for designing a mixing chamber without moving parts such as an impeller and hence designing an appliance that is easy in use and maintenance and yet performs according to a high standard of short time for reconstitution and dispensing whilst guaranteeing optimal sensory quality of the beverage.

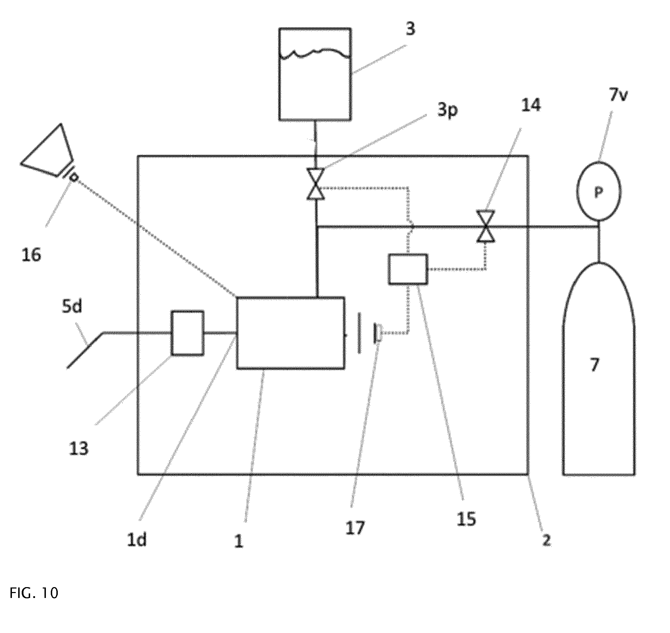

According to a preferred embodiment as shown in Fig. 10, the appliance comprises a pressure regulator for controlling the pressure in the liquid line. Such pressure regulator 12 can be provided at the source 4 or can be provided separately in the device. The pressure regulator should be controllable by means of a control unit 13 preferably an electronic unit comprising a microprocessor housed in the dispensing device.

In the device one or more single-serve containers can be loaded comprising identification means 14 such as for example a bar-code scanner or RFID scanner that allows identifying content related identity tags on the pods or capsules such as a bar code or RFID tag 15.

In this case the pressure regulator control unit also comprises a memory comprising a set of pre-loaded dispensing pressure level sequences for setting and varying the pressure in the liquid line during a dispensing cycle, whereby the microprocessor selects a sequence based on input received from the pod or capsule identification means and controls the pressure regulator accordingly.

In order to allow a good control it is further preferred that the control unit comprises a flow meter allowing determining the volume of liquid flowing through the liquid line as an input to the microprocessor.

The source of pressurized gas can either be a metal high pressure cartridge comprising liquid food grade CO2, N2 readily available on the market or can be a plastic cartridge comprising food grade CO2, N2 at lower pressures of between 4 and 2 bar.

The above described device allows dispensing a beverage whereby the pressure in the liquid line changes from a first pressure level higher than ambient pressure to a second pressure level higher than the ambient level by said pressure controller during mixing and dispensing of the beverage.

As such it for example possible to load the device with a pod or capsule containing a concentrated beer and coupling the device with a source of carbonated water.

The device identifies the pod and thereby the content thereof and a pre-set pressure sequence for dispensing beer is loaded from the memory.

Upon dispensing, the pressure regulator will be controlled to set the pressure in the liquid line at a pressure corresponding to the gas pressure desired in the beer upon dispensing (eg. 2 to 2,2 bar). This pressure is maintained substantially constant during the dispensing of approximately 90% of the volume of the beer to be dispensed. Subsequently the pressure regulator is actuated to increase pressure to a level of eg. 2,4 bar in the liquid line, to promote foaming of the beer at dispensing and as such obtain a foam collar on the dispensed beer. This pressure in the liquid line is maintained substantially constant until all liquid for the beer is dispensed.

After the required volume of liquid is dispensed, the pressure regulator can be actuated to further increase the pressure to a level of eg. 3 bar to clean the liquid line and blow out any remaining liquid rests, thereby preventing liquid remaining in the liquid line which would increase the chance of the formation of a biofilm in the liquid line.

Alternatively, the identification means can be used to detect the content of the single-serve containers, such as the alcohol content of the second single-serve container, allowing the appliance to select the amount of water needed to dilute the alcohol content of the second single-serve container to a level of 30 vol% or lower before adding the content of the first single-serve container thereto.

Referring to Fig. 2, the mixing chamber, comprises mixing means comprises one or more double jet mixers, comprising each at least a first jet mixer liquid supply entry in liquid communication with the first liquid line and a second jet mixer liquid supply entry in liquid communication with the second liquid line, a pair of jet mixer liquid flow channels having each a jet mixer discharge end for expelling liquids in mutually, oppositely directed or impinging jet streams, so to mix the liquids into a liquid mixture, and a jet mixer outlet through which the liquid mixture can leave the double jet mixer in liquid communication with the beverage outlet.

| **REF** | **DESCRIPTION** |
|---|---|
| 1 | First chamber |
| 1d | Outlet of first chamber |
| 1u | Inlet of first chamber |
| 2 | Second chamber |
| 2d | Outlet of second chamber |
| 2u | Inlet of second chamber |
| 3 | Source of liquid diluent |
| 3p | Pump for liquid diluent |
| 5d | Outlet of dispensing tube |
| 5u | Inlet of dispensing tube |
| 5v | Valve for liquid diluent |
| 7 | Source of pressurized gas (CO₂ or N₂) |
| 7v | Valve for pressurized gas |
| 10 | Vessel for collecting the in situ created beverage |
| 11 | Dispensing apparatus |
| 12 | Housing(s) for receiving first and second chambers |
| 13 | Mixing chamber |
| 100 | Beverage to be concentrated |
| 200 | Retentate |
| 300 | Permeate |
| 400 | Concentrate fraction comprising ethanol and volatile flavour compounds |
| 500 | Leftover fraction |
| 14 | Pressure regulator |
| 15 | Control unit |
| 16 | Identification means |
| 17 | Single-serve container identity tag |

## Claims

1. A single-serve container comprising a malt based beverage concentrate or fermented beverage concentrate, **characterized in that** said concentrate is in a liquid state, has a dynamic viscosity of maximally 40.10³ mPa.s; a real extract density of at least 2,6°P; and an alcohol content of at least 1 vol%.

2. The single-serve container, the concentrate having an alcohol content ranging between 1 vol% and 30 vol%.

3. The single-serve container, the concentrate having a real extract density of at least 6°P, prefarably at least 8°P, most preferably at least 12°P.

4. The single-serve container according to any of claims 1-3, the concentrate being obtained from a fermented malt based liquid.

5. A kit of parts comprising:
a. the first single-serve container as defined in any of claims 1 to 4; and
b. A second single serve container containing an ethanol solution having an ethanol concentration of 80 vol% or more.

6. A kit of parts according to claim 5, wherein both first and second containers are attached to one another.

7. A method for obtaining a beverage from a single-serve container as identified in any of claims 1 to 4, said method comprising the steps of:
a. Providing a single serve container as identified in any of claims 1 to 4;
b. Diluting the content of said single-sever container with a diluent liquid having an alcohol content of 30 vol% or less.

8. The method for obtaining a beverage from a kit in parts as identified in claim 5 or 6, comprising the steps of:
a. providing a first single-serve container comprising a malt based beverage concentrate **characterized in that** said concentrate is in a liquid state, has a viscosity of maximally 40.10³ mPa.s a real extract density of at least 2,6°P and an alcohol content of at least 1 vol%;
b. Providing a second single-serve container containing an ethanol solution having an ethanol concentration of 80 vol% or more;
c. Providing a liquid diluent source;
d. Mixing a portion of the diluent source with the content of the second single-serve container, to obtain an intermediate liquid mixture having an alcohol content of 30 vol% or less;
e. Mixing the content of the first single-serve container with said intermediate liquid mixture and potentially an additional amount of the liquid diluent to obtain a beverage.

9. The method according to claim 7 or 8, said diluent being chosen from the group containing: still water, carbonated water, beer-like beverage or cider-like beverage.

10. The method according to claim 7 or 8 comprising the step of carbonating the intermediate liquid mixture or the beverage.

11. The method according to claim 7 or 8, comprising the step of cooling the beverage to a temperature of 3°C or lower and carbonating the beverage prior to dispensing the beverage in a serving vessel.

12. The method according to any of claims 7 to 11, wherein the beverage is a fermented malt-based beverage having an alcohol content ranging between 1 and 12 vol%.
